# EUROPÄISCHE PATENTSCHRIFT

(11) **EP 1 933 053 B1**
(45) Veröffentlichungstag und Bekanntmachung des Hinweises auf die Patenterteilung: **10.08.2011**
(21) Anmeldenummer: 07023434.9
(22) Anmeldetag: 04.12.2007
(51) Int. Cl.: F16D 13/64, F16D 69/04

(54) **Reibbelag und Reibungskupplung mit einem solchen Reibbelag**
Friction facing and friction clutch with such a friction facing
Garniture de friction et embrayage à friction doté d'une telle garniture de friction

(30) Priorität: 14.12.2006 DE 102006058944; 12.10.2007 DE 102007048946
(43) Veröffentlichungstag der Anmeldung: 18.06.2008
(73) Patentinhaber: ZF Friedrichshafen AG, 88038 Friedrichshafen (DE)
(72) Erfinder: Diemer, Matthias, Dr., 97493 Bergrheinfeld (DE)

(56) Entgegenhaltungen:
- FR-A- 2 871 538
- GB-A- 624 200
- US-A- 4 747 476

## Beschreibung

Die Erfindung betrifft einen Reibbelag, insbesondere für eine Kupplungsscheibe oder für eine Bremse, der mindestens ein Trägerelement aufweist, das zumindest einseitig mit Reibmaterial versehen ist, nach dem Oberbegriff des Anspruchs 1. Des Weiteren betrifft die Erfindung eine Reibungskupplung, insbesondere eine Kraftfahrzeugreibungskupplung.

Ein gattungsgemäßer Reibbelag ist aus US-A-4,747,476 bekannt.

Bei Reibbelägen dieser Art wird angestrebt, dass sie eine hohe Festigkeit aufweisen, damit sie möglichst radial außerhalb der Reibfläche mit einem anderen Teil einer Kupplungsscheibe verbunden werden können, wobei insbesondere ein Vernieten in Frage kommt. Zum Erzielen einer hohen Festigkeit ist es bekannt, die Reibflächen mit einem Verstärkungsblech zu verbinden. Gelingt eine gute, möglichst stoffschlüssige Verbindung des Reibmaterials mit dem Verstärkungsblech, weist der entstehende Reibbelag einen hohen Widerstand gegen Biegeverformungen auf, und er kann außerhalb der radialen Erstreckung des Reibmaterials mit einer Belagfeder oder Trägerscheibe einer Kupplungsscheibe verbunden werden. Der Reibbelag kann dann auch bei hinreichendem Verschleißvolumen dünn ausgeführt werden, was sich positiv auf den Bauraum auswirkt. Weiterhin ist die Berstfestigkeit des Reibbelags dann in vorteilhafter Weise hoch.

Als Möglichkeiten der Verbindung des Reibmaterials mit dem Verstärkungsblech kommt eine Verklebung des Reibmaterials mit dem Blech in Frage. Dies ist jedoch relativ kostenintensiv und erfordert unter Umständen auch Lösungsmittel, die in der Verarbeitung problematisch sind.

Es können auch massegepresste Beläge eingesetzt werden. Nachteilig ist bei diesen jedoch, dass sie gegenüber gewickelten Belägen ein verändertes Reibungsverhalten aufweisen. Weiterhin ist es nicht günstig, dass aufwändige Blechverstärkungen mit hoher Masse nötig sind, um die Festigkeit zu erreichen.

Eine weitere Möglichkeit zur Schaffung eines Reibbelags der eingangs genannten Art ist in der DE 10 2005 017 595 A1 beschrieben. Dort wird eine Kupplungsscheibe für eine Kraftfahrzeugkupplungseinrichtung offenbart, die einen um eine Drehachse herum angeordneten und im wesentlichen scheibenförmig ausgebildeten Belagträger aufweist, an dem beidseitig Reibbeläge befestigt sind. Es ist dabei vorgesehen, dass der Reibbelag ein Trägerelement aufweist, das von Reibmaterial umgeben ist, wobei das Trägerelement mit dem Belagträger verbunden ist. Hierfür wird ein Pressvorgang eingesetzt, bei dem in das Presswerkzeug das Trägerelement eingelegt wird und dann im Rahmen eines Pressvorgangs das Reibmaterial mit dem Trägerelement verbunden wird.

Es hat sich gezeigt, dass die letztgenannte Lösung bereits zu sehr vorteilhaften Resultaten führt, dass jedoch insbesondere bei Reibbelägen größerer Abmessungen Verzüge des Reibmaterials nicht gänzlich verhindert werden können.

Der Erfindung liegt daher die **Aufgabe** zugrunde, einen Reibbelag der eingangs genannten Art sowie eine hiermit ausgestattete Reibungskupplung zu schaffen, der bzw. die sich dadurch auszeichnet, dass ein steifer und fester Verbund von Trägerelement und Reibmaterial entsteht, wobei die Anbindung, insbesondere Vernietung, zur Erzielung eines hohen Verschleißvolumens innerhalb des inneren Reibradius ermöglicht wird und der Reibbelag einen hohen Widerstand gegen Biegeverformungen aufweist. Ferner soll sich der Reibbelag durch Verzugsarmut und eine hohe Berstfestigkeit auszeichnen.

Die **Lösung** dieser Aufgabe durch die Erfindung ist dadurch gekennzeichnet, dass das Trägerelement eine Anzahl sich radial nach innen erstreckende Befestigungsabschnitte aufweist, die über die radiale Erstreckung des Reibmaterials hinaus reichen, dass das Trägerelement und die Stege an einer (Stirn)Seite bündig mit dem Reibmaterial abschließen und sich das Reibmaterial über die andere (Stirn)Seite des Trägerelements und der Stege hinaus erstreckt; Trägerelement und Stege sind hiernach also in das Reibmaterial bündig eingebettet.

Der Reibbelag weist bevorzugt eine im Wesentlichen kreisringartige Grundform auf. Das Trägerelement und die Stege sind zumeist beidseitig, d. h. an beiden Stirnseiten des Trägerelements, mit Reibmaterial versehen bzw. von diesem ummantelt.

Das Reibmaterial ist dabei meist als durchgängiger Ring ausgebildet, wobei in die Oberfläche desselben Nuten oder Einschnitte eingebracht sein können.

Das Trägerelement weist vorzugsweise ein durchgängiges und sich über den gesamten Umfang des Reibbelags erstreckendes Ringteil auf.

Unter der genannten relativ kleinen radialen Erstreckung des Ringteils bzw. des Ringabschnittteils ist insbesondere zu verstehen, dass diese zwischen 7 % und 30 %, vorzugsweise zwischen 10 % und 20 %, der radialen Erstreckung des Reibmaterials beträgt.

Besonders bevorzugt ist das Reibmaterial an dem Trägerelement durch einen in-situ-Prozess angebracht, wozu später noch nähere Informationen gegeben werden.

Die zungenförmig ausgebildeten Stege erstrecken sich vorzugsweise vom Ringteil bzw. Ringabschnittteil radial nach außen. In diesem Falle können die zungenförmig ausgebildeten Stege bis zum radial äußeren Ende des Reibmaterials reichen oder - alternativ hierzu - auch zum radial äußeren Ende des Reibmaterials einen Abstand halten. Die letztgenannte Lösung zeichnet sich dadurch aus, dass die Einbringung der Stege in das Reibmaterial hierdurch verbessert werden kann, da sich eine bessere Ummantelung der Stege ergibt, wenn die Zungenenden nicht ganz den Außendurchmesser des Reibbelags erreichen. Der verbleibende Steg aus Reibmaterial hält die unter Spannung stehenden Stege im Verbund.

Die zungenförmig ausgebildeten Stege können sich vom Ringteil bzw. vom Ringabschnittteil aus auch radial nach innen erstrecken und in ihrem radial inneren Endbereich die Befestigungsabschnitte bilden. Hierbei ist es möglich, das Reibmaterial auf das Trägerelement derart abzustimmen, dass sich andere, auch isotrope Schrumpfungszustände ergeben. In diesen Fällen kann sich insbesondere das umlaufende Ringteil im Außenbereich des Reibbelags befinden.

Die zungenförmig ausgebildeten Stege können - in Richtung der Drehachse des Reibbelags gesehen - bogenförmig oder spiralförmig ausgebildet sein. Die können - in Richtung der Drehachse des Reibbelags gesehen - alternativ hierzu auch beispielsweise mäanderförmig ausgebildet sein.

Die mittlere Breite der zungenförmig ausgebildeten Stege sind bevorzugt kleiner oder gleich der radialen Erstreckung des Ringteils oder Ringabschnittteils.

Eine spezielle Ausgestaltung sieht vor, dass ein Befestigungsabschnitt zwei Ringabschnittteile miteinander verbindet.

Das Ringteil bzw. das Ringabschnittteil liegt vorteilhaft auf dem neutralen Radius des Reibbelags, s. unten. Der neutrale Radius liegt dabei insbesondere im Bereich zwischen 15 % und 40 % der radialen Erstreckung des Reibmaterials - vom radial inneren Ende des Reibmaterials aus gemessen.

Die Befestigungsabschnitte sind bevorzugt als Ösen für den Durchtritt eines Niets ausgebildet.

Das Ringteil bzw. das Ringabschnittteil, die zungenförmig ausgebildeten Stege und die Befestigungsabschnitte sind bevorzugt einteilig ausgebildet, wodurch sich nicht nur Vorteile bezüglich der Festigkeit ergeben, sondern auch hinsichtlich einer ökonomischen Fertigung. Das Ringteil bzw. Ringabschnittteil, die zungenförmig ausgebildeten Stege und die Befestigungsabschnitte können insbesondere aus einer Blechplatine ausgestanzt werden. Diese ist mit Vorteil eben ausgebildet.

Die erfindungsgemäße Reibungskupplung, insbesondere vorgesehen als Kraftfahrzeugreibungskupplung, hat eine zwischen einem Schwungrad und einer Anpressplatte angeordneten Kupplungsscheibe. Die Kupplungsscheibe weist dabei einen Reibbelag auf, wie er vorstehend beschrieben wurde.

Das Trägerelement weist aufgrund der definierten Gestalt eine geringe radiale Biegesteifigkeit auf. Die Verformbarkeit des Trägerelements und seiner zungenartigen Stege bei Kraftbeaufschlagung in radiale Richtung ist ebenfalls hoch. Erreicht wird dies - im Unterschied zu vorbekannten Lösungen - durch den Verzicht auf sich in radiale Richtung erstreckende geschlossene Materialbereiche des Trägerelements, d. h. durch die vorgeschlagenen dünnen Stege, die als sich weitgehend in Umfangsrichtung erstreckende, biegeweiche, spiralförmig oder mäanderförmig ausgebildete Zungen ausgeführt sein können.

Dadurch ergibt sich beim Pressen, Abkühlen und Aushärten ein relativ geringer Verzug, da das Trägerelement, vorzugsweise aus Blech, der Verformung wenig Widerstand entgegensetzt, die durch Polymerisation, Vulkanisierung und thermischer Schrumpfung verursacht wird, wobei sich dieser Effekt in radialer Richtung anders auswirkt als in Umfangsrichtung.

Bei der Verarbeitung des Belagwicklings zum fertigen Belag existiert ein spezifischer Radius, der keine bleibende bzw. eine rein thermische Längenänderung, die der des Materials des Trägerelements (Blech) entspricht, erfährt. Auf diesem sog. neutralen Radius befindet sich vorzugsweise der bevorzugt weitgehend geschlossene Ringteil des Trägerelements. Hierdurch entsteht insoweit bei dem erwähnten Fertigungsprozess durch Pressen unter Wärmeeinwirkung keine den Reibbelag verformende Spannung.

Die neutrale Faser kann durch Längen-Messungen ermittelt werden. Dazu werden Außen- und Innendruchmesser nach dem Pressen und nach dem Härten bestimmt. Der Außendurchmesser nimmt dabei ab, der Innendurchmesser nimmt zu. Durch Interpolation der Dehnungen über den Radius lässt sich ein Radius bestimmen, der keine Längenänderung erfährt. Für das bevorzugte Belagmaterial liegt die neutrale Faser meist im Bereich von ca. 20 % der Belagringbreite, vom Innenradius an gemessen.

Der angestrebte positive Effekt der Verstärkung wird erfindungsgemäß durch die sich in Umfangsrichtung ausgerichteten Bereiche des Trägerelements erreicht, d. h. hierdurch wird eine höhere Biegesteifigkeit senkrecht zur Erstreckungsebene des Reibbelags erzielt.

Es ergeben sich noch weitere Vorteile:

Durch verminderten Schleifverlust bzw. durch geringeren oder ganz entfallenden Verzug wird weniger Reibmaterial benötigt.

Es ergeben sich eine höhere Berstfestigkeit bei geringerem Verzug und wenig Eigenspannungen im Reibbelag.

Der Faseranteil des Wicklings, der mit dem Trägerelement verbunden wird, kann reduziert bzw. optimiert werden, da das Trägerelement bereits die Festigkeit des Reibbelags sicherstellt.

Die Belagfedern liegen auf den Befestigungsabschnitten des Trägerelements auf, wodurch die Kraft homogener in das Belagmaterial eingeleitet wird. Der Belagfederrückgang ist reduziert.

Gegenüber Lösungen, bei denen ein einzelner Ring zur Verstärkung eingelegt wird, hat die erfindungsgemäße Ausgestaltung den Vorteil der Selbstzentrierung über den Innendurchmesser oder den Außendurchmesser des Reibbelags oder die Bohrungen zur Vernietung.

Die Verzahnung bzw. der Formschluss der Stege mit dem Reibmaterial ist sehr hoch. Der Zusammenhalt ist besser als bei reinem Flächenkontakt.

Die Beständigkeit gegen Fliehkraftbelastung bleibt auch bestehen, wenn das Reibmaterial bis auf das Trägerelement abgenutzt ist. Die nicht nutzbaren Reste des Reibmaterials befinden sich zwischen den Stegen und sind volumenmäßig gering.

Das Trägerelement, auch wenn aus metallischem Blech bestehend, ist sehr leicht. Im Zusammenbau mit dem dünnen Reibmaterial ergibt sich gegenüber einem klassischen Reibbelag (d. h. bei Vernietung innerhalb der Reibfläche, wodurch das Volumen unterhalb der Nietköpfe nicht nutzbar ist) ein Gewichtsvorteil.

In der Zeichnung sind Ausführungsbeispiele der Erfindung dargestellt. Es zeigen:
- Fig. 1: den Radialschnitt durch eine Kraftfahrzeugkupplungseinrichtung,
- Fig. 2: den Radialschnitt durch einen Teil einer Kupplungsscheibe einer solchen Kraftfahrzeugkupplungseinrichtung mit Darstellung des Reibmaterials, wobei der Schnitt A-B gemäß Fig. 3 dargestellt ist,
- Fig. 3: die Seitenansicht eines Reibbelags mit dargestelltem Trägerelement und nur angedeutetem Reibmaterial gemäß einer ersten Ausführungsform der Erfindung,
- Fig. 4: eine zweite Ausführungsform der Erfindung in der Darstellung gemäß Fig. 3,
- Fig. 5: eine dritte Ausführungsform der Erfindung in der Darstellung gemäß Fig. 3,
- Fig. 6: eine vierte Ausführungsform der Erfindung in der Darstellung gemäß Fig. 3 und
- Fig. 7: eine fünfte Ausführungsform der Erfindung in der Darstellung gemäß Fig. 3.

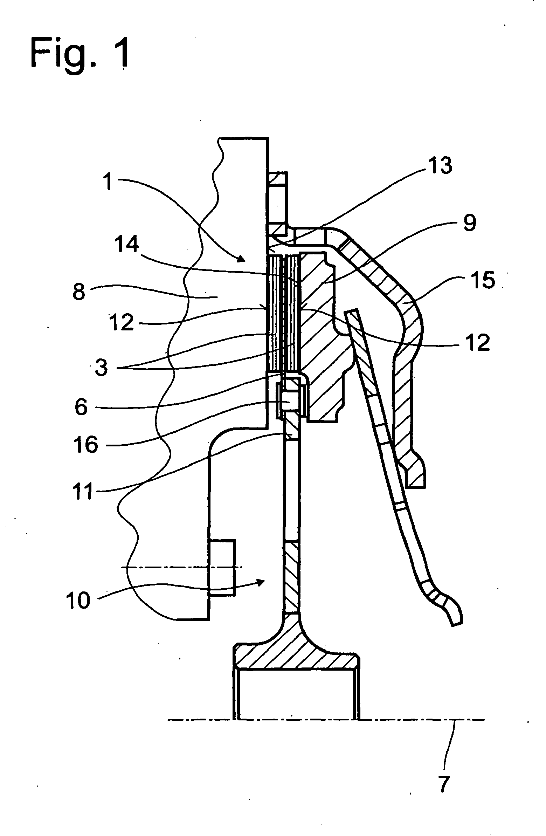

In Fig. 1 ist eine Kraftfahrzeug-Reibungskupplung im Radialschnitt zu sehen, die in bekannter Weise aufgebaut ist. Eine Kupplungsscheibe 10 ist zwischen einem Schwungrad 8 und einer Anpressplatte 9 angeordnet, wobei durch Aufbringung einer axialen Andruckkraft die Anpressplatte 9 einen Reibschluss zwischen sich, der Kupplungsscheibe 10 und dem Schwungrad 8 herstellt. Die Bauteile drehen um eine Drehachse 7; sie sind durch ein Kupplungsgehäuse 15 abgedeckt.

Die Kupplungsscheibe 10 weist eine Trägerscheibe 11 auf, an deren radial äußerem Bereich ein Reibbelag 1 mittels einer Nietverbindung 16 fixiert ist. Bei der Aufbringung einer Axialkraft liegt die Oberfläche 13 des Schwungrades 8 auf der (linken) Oberfläche 12 des Reibbelags 1 und die (rechte) Oberfläche des Reibbelags 12 auf der Oberfläche 14 der Anpressplatte 9 auf.

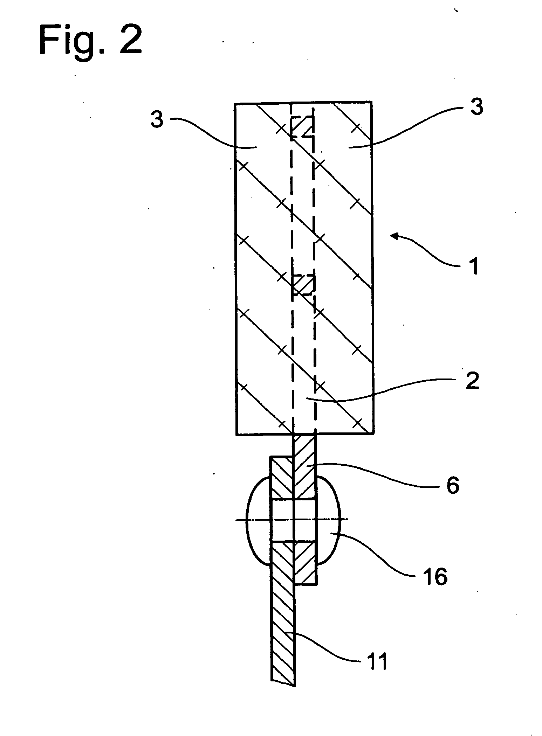

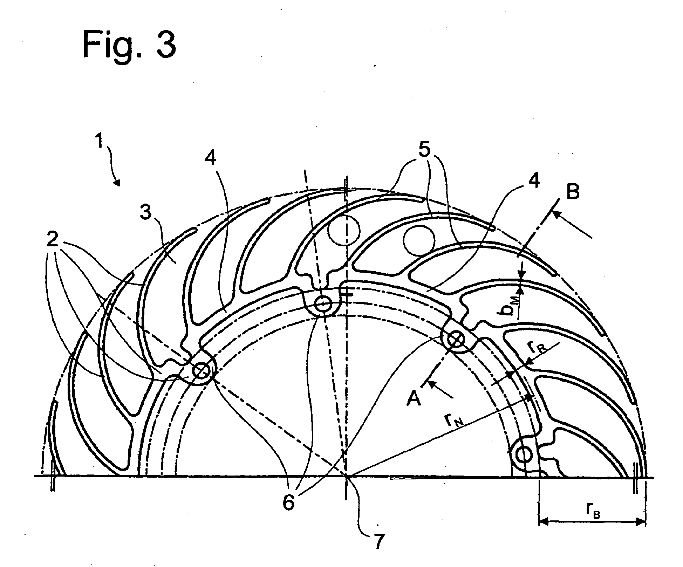

Der Reibbelag selber besteht vorliegend aus einem Trägerelement, das beidseitig mit Reibmaterial 3 versehen ist. Details hierzu ergeben sich aus den Figuren 2 und 3. In Fig. 2 ist zu sehen, dass der Reibbelag 1 ein Trägerelement 2 aufweist, das in-situ (s. unten) mit Reibmaterial 3 verbunden ist. An seinem radial innenliegenden Bereich ist der Reibbelag 1 mit einem Befestigungsabschnitt 6 versehen, der nach Art einer Öse ausgebildet ist, so dass der Nietschaft einer Nietverbindung 16 durch das aus Stahlblech bestehende Trägerelement 2 hindurch treten kann, wodurch der Reibbelag 1 an der Trägerscheibe 11 der Kupplungsscheibe befestigt wird.

Wie aus Fig. 3 zu sehen ist, besteht das Trägerelement 2 aus einem Ringteil 4, das sich vorliegend um den gesamten Umfang des Reibbelags 1 herum erstreckt. Wie Fig. 3 entnommen werden kann, liegen streng genommen hier eine Anzahl Ringabschnittteile 4 vor, die jeweils durch einen Befestigungsabschnitt 6 miteinander verbunden werden. Insgesamt ergibt sich jedenfalls funktionell eine um den gesamten Umfang umlaufende Ringstruktur 4. Von dieser erstrecken sich radial nach außen zungenförmig ausgebildete Stege 5, die vorliegend etwa viertelkreisförmig gestaltet sind. Sie erstrecken sich im vorliegenden Falle bis zum radial äußeren Rand des Reibbelags 1.

Während die radiale Erstreckung r_{R} des Ringteils bzw. der Ringabschnittteile 4 etwa bei 10 % der radialen Erstreckung r_{B} des Reibmaterials 3 liegt, sind die Stege 5 dünner ausgeführt. Die Breite b_{M} der Stege 5 ist hier konstant und kleiner als der Wert r_{R}. Die radiale Mitte des Ringteils bzw. der Ringabschnittteile 4 liegt bevorzugt auf dem neutralen Radius r_{N}.

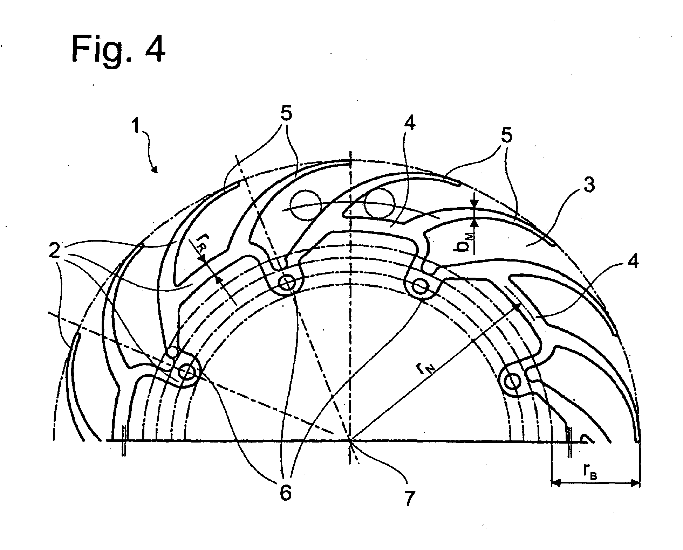

Eine alternative Ausgestaltung des Reibbelags 1 ist in Fig. 4 zu sehen. Hier sind im Verhältnis zur Lösung gemäß Fig. 3 weniger zungenförmig ausgebildete Stege 5 vorgesehen. Hier weist das Trägerelement 2 auch - deutlicher als bei der Lösung gemäß Fig. 3 - Ringabschnittteile 4 auf, die jeweils über Stege 5 und einen Befestigungsabschnitt 6 miteinander verbunden sind. Wie weiter zu sehen ist, liegen die Ringabschnittteile 4 hier radial auch weiter außen, so dass sich die Stege 5 radial über die Ringabschnittteile 4 weiter hinaus nach innen erstrecken.

Anzumerken ist weiterhin, dass hier die Stege 5 keine konstante Breite aufweisen, sondern im radial inneren Bereich breiter sind als radial außen. Die mittlere Breite der Stege 5 ist mit b_{M} angegeben, wobei hierunter etwa der gemittelte Wert der Breite über den Gesamtverlauf des Stegs 5 zu verstehen ist.

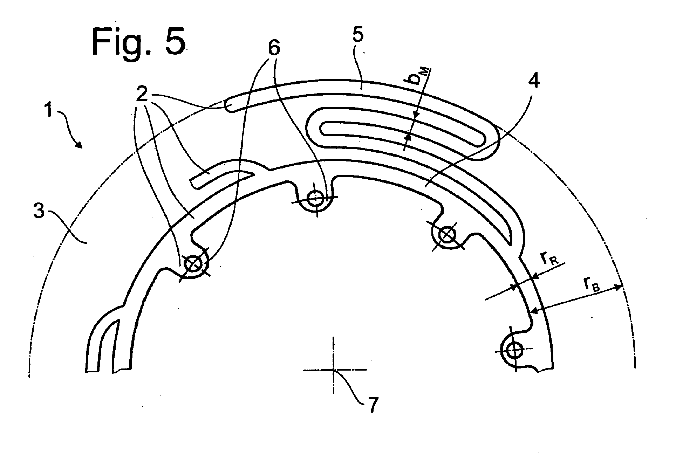

Bei der Ausgestaltung nach Fig. 5 sind die Stege 5 wieder mit weitgehend konstanter Breite b_{M} ausgebildet, allerdings verlaufen sie hier nicht bogenförmig radial nach außen, sondern mäanderförmig vom Ringteil 4 radial nach außen. Ansonsten gelten die analogen Ausführungen wie zu den vorherigen Ausführungsbeispielen. Hier ist das Ringteil 4 als durchlaufender Ring ausgeführt. Zu erwähnen ist hier weiter, dass das Ringteil 4 im radial inneren Endbereich des Reibbelags 1 angeordnet ist.

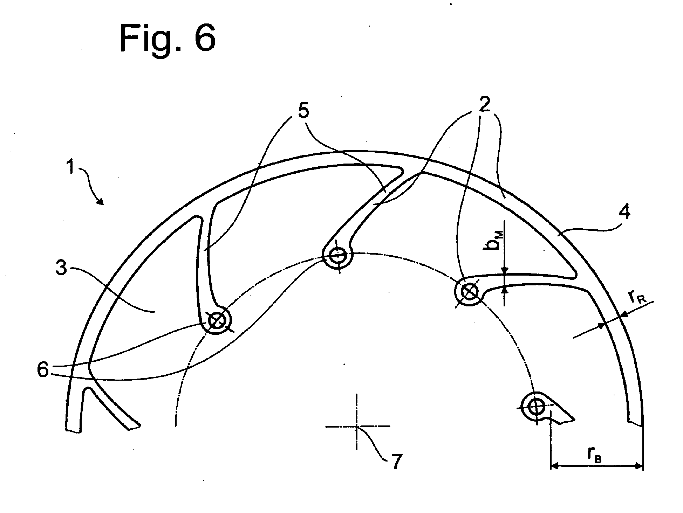

Die umgekehrte Lösung findet sich in Fig. 6: Hier ist das Ringteil 4 ebenfalls (wie in Fig. 5) als geschlossener Ring ausgeführt: Allerdings verläuft das Ringteil 4 hier im radial äußeren Bereich des Reibbelags 1. Die Stege 5 erstrecken sich hier radial nach innen, und zwar wieder bogenförmig vom Ringteil 4 weg. An ihrem Endbereich gehen die Stege 5 in die Befestigungsabschnitte 6 über, die sich über das radial innere Ende des Reibmaterials 3 hinaus nach innen erstrecken.

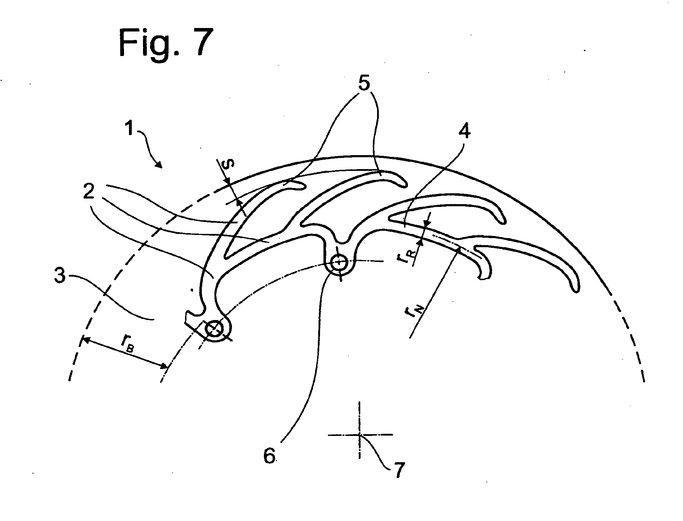

Die Lösung gemäß Fig. 7 ist ähnlich derjenigen gemäß Fig. 4, wobei hier allerdings vorgesehen ist, dass die sich bogenförmig radial nach außen erstreckenden Stege 5 einen radialen Abstand s zum radial äußeren Ende des Reibbelags 1 halten. Wie weiter gesehen werden kann, können sich die Stege nach dem Erreichen ihrer radial äußersten Lage auch wieder geringfügig zurück nach innen erstrecken.

Das Trägerelement 2 ist bei allen Ausführungsformen beidseitig vom Reibmaterial 3 umgeben. Es besteht vorliegend aus hochfestem Material, wobei bevorzugt Stahl vorgesehen ist.

Zur Herstellung des Reibbelags 1 wird das Trägerelement 2 zunächst in ein Presswerkzeug (Pressmatrize) eingelegt. Das Trägerelement wird dann mit Reibmaterial umgeben. Schließlich erfolgt ein Pressen des Reibmaterials 3 und des Trägerelements 2, so dass eine feste Verbindung zwischen Reibmaterial 3 und Trägerelement 2 entsteht. Dabei kann das Reibmaterial 3 und das Trägerelement 2 beim Pressen auf eine gegenüber der Umgebungstemperatur erhöhte Temperatur gebracht werden. Der Press- und der sich anschließende Aushärtevorgang reichen aus, um eine dauerhafte Verbindung zwischen dem Trägerblech 2 und dem Reibmaterial 3 herzustellen.

### Bezugszeichenliste

- 1: Reibbelag
- 2: Trägerelement
- 3: Reibmaterial
- 4: Ringteil/ Ringabschnittsteil
- 5: zungenförmig ausgebildeter Steg
- 6: Befestigungsabschnitt
- 7: Drehachse
- 8: Schwungrad
- 9: Anpressplatte
- 10: Kupplungsscheibe
- 11: Trägerscheibe
- 12: Oberfläche des Reibbelags
- 13: Oberfläche des Schwungrads
- 14: Oberfläche der Anpressplatte
- 15: Kupplungsgehäuse
- 16: Nietverbindung

- r_{R}: radiale Erstreckung des Ringteils / Ringabschnittsteils
- r_{B}: radiale Erstreckung des Reibmaterials
- s: radialer Abstand
- b_{M}: mittlere Breite der Stege
- r_{N}: neutraler Radius

## Patentansprüche

1. Reibbelag (1), insbesondere für eine Kupplungsscheibe oder für eine Bremse, der mindestens ein Trägerelement (2) aufweist, das zumindest einseitig mit Reibmaterial (3) versehen ist, wobei
das Trägerelement (2) mindestens ein sich über einen vorgegebenen Umfangsabschnitt des Reibbelags (1) herum erstreckendes Ringteil oder Ringabschnittteil (4) aufweist, dessen radiale Erstreckung (r_{R}) klein ist im Verhältnis zur radialen Erstreckung (r_{B}) des Reibmaterials (3), wobei an dem Ringteil oder Ringabschnittsteil (4) eine Anzahl zumindest einseitig vom Reibmaterial (3) umgebener, zungenförmig ausgebildeter Stege (5) angeordnet ist **dadurch gekennzeichnet, dass** das Trägerelement (2) eine Anzahl sich radial nach innen erstreckende Befestigungsabschnitte (6) aufweist, die über die radiale Erstreckung des Reibmaterials (3) hinaus reichen, dass das Trägerelement (2) und die Stege (5) an einer Seite bündig mit dem Reibmaterial (3) abschließen und sich das Reibmaterial (3) über die andere Seite des Trägerelements (2) und der Stege (5) hinaus erstreckt.

2. Reibbelag nach Anspruch 1, **dadurch gekennzeichnet, dass** er eine im wesentlich kreisringartige Grundform aufweist.

3. Reibbelag nach Anspruch 1 oder 2, **dadurch gekennzeichnet, dass** das Trägerelement (2) und die Stege (5) beidseitig mit Reibmaterial (3) versehen sind.

4. Reibbelag nach einem der Ansprüche 1 bis 3, **dadurch gekennzeichnet, dass** das Reibmaterial (3) als durchgängiger Ring ausgebildet ist.

5. Reibbelag nach Anspruch 4 **dadurch gekennzeichnet, dass** in die Oberfläche des Reibmaterials (3) Nuten oder Einschnitte eingebracht sind.

6. Reibbelag nach einem der Ansprüche 1 bis 5, **dadurch gekennzeichnet, dass** das Trägerelement (2) ein durchgängiges und sich über den gesamten Umfang des Reibbelags (1) erstreckendes Ringteil (4) aufweist.

7. Reibbelag nach einem der Ansprüche 1 bis 6, **dadurch gekennzeichnet, dass** die radiale Erstreckung (r_{R}) des Ringteils oder Ringabschnittteils (4) zwischen 7 % und 30 %, vorzugsweise zwischen 10 % und 20 %, der radialen Erstreckung (r_{B}) des Reibmaterials (3) beträgt.

8. Reibbelag nach einem der Ansprüche 1 bis 7, **dadurch gekennzeichnet, dass** das Reibmaterial (3) an dem Trägerelement (2) durch einen in-situ-Prozess angebracht ist.

9. Reibbelag nach einem der Ansprüche 1 bis 8, **dadurch gekennzeichnet, dass** die zungenförmig ausgebildeten Stege (5) sich vom Ringteil bzw. Ringabschnittteil (4) radial nach außen erstrecken.

10. Reibbelag nach Anspruch 9, **dadurch gekennzeichnet, dass** die zungenförmig ausgebildeten Stege (5) bis zum radial äußeren Ende des Reibmaterials (3) reichen.

11. Reibbelag nach Anspruch 9, **dadurch gekennzeichnet, dass** die zungenförmig ausgebildeten Stege (5) zum radial äußeren Ende des Reibmaterials (3) einen Abstand (s) halten.

12. Reibbelag nach einem der Ansprüche 1 bis 8, **dadurch gekennzeichnet, dass** die zungenförmig ausgebildeten Stege (5) sich vom Ringteil bzw. Ringabschnittteil (4) radial nach innen erstrecken und in ihrem radial inneren Endbereich die Befestigungsabschnitte (6) bilden.

13. Reibbelag nach einem der Ansprüche 1 bis 12, **dadurch gekennzeichnet, dass** die zungenförmig ausgebildeten Stege (5) in Richtung der Drehachse (7) des Reibbelags (1) gesehen bogenförmig ausgebildet sind.

14. Reibbelag nach einem der Ansprüche 1 bis 12, **dadurch gekennzeichnet, dass** die zungenförmig ausgebildeten Stege (5) in Richtung der Drehachse (7) des Reibbelags (1) gesehen mäanderförmig ausgebildet sind.

15. Reibbelag nach einem der Ansprüche 1 bis 14, **dadurch gekennzeichnet, dass** die mittlere Breite (b_{M}) der zungenförmig ausgebildeten Stege (5) kleiner oder gleich der radialen Erstreckung (r_{R}) des Ringteils oder Ringabschnittteils (4) ist.

16. Reibbelag nach einem der Ansprüche 1 bis 15, **dadurch gekennzeichnet, dass** ein Befestigungsabschnitt (6) zwei Ringabschnittteile (4) miteinander verbindet.

17. Reibbelag nach einem der Ansprüche 1 bis 16, **dadurch gekennzeichnet, dass** das Ringteil bzw. das Ringabschnittteil (4) auf dem neutralen Radius (r_{N}) liegt.

18. Reibbelag nach Anspruch 17, **dadurch gekennzeichnet, dass** der neutrale Radius (r_{N}) im Bereich zwischen 15 % und 40 % der radialen Erstreckung (r_{B}) des Reibmaterials (3), vom radial inneren Ende des Reibmaterials (3) aus gemessen, liegt.

19. Reibbelag nach einem der Ansprüche 1 bis 18, **dadurch gekennzeichnet, dass** die Befestigungsabschnitte (6) als Ösen für den Durchtritt eines Niets ausgebildet sind.

20. Reibbelag nach einem der Ansprüche 1 bis 19, **dadurch gekennzeichnet, dass** das Ringteil bzw. Ringabschnittteil (4), die zungenförmig ausgebildeten Stege (5) und die Befestigungsabschnitte (6) einteilig ausgebildet sind.

21. Reibbelag nach Anspruch 20, **dadurch gekennzeichnet, dass** das Ringteil bzw. Ringabschnittteil (4), die zungenförmig ausgebildeten Stege (5) und die Befestigungsabschnitte (6) aus einer Blechplatine ausgestanzt sind.

22. Reibbelag nach Anspruch 21, **dadurch gekennzeichnet, dass** die Blechplatine eben ausgebildet ist.

23. Reibungskupplung, insbesondere Kraftfahrzeugreibungskupplung, mit einer zwischen einem Schwungrad (8) und einer Anpressplatte (9) angeordneten Kupplungsscheibe (10),
**dadurch gekennzeichnet,**
**dass** die Kupplungsscheibe (10) einen Reibbelag (1) nach einem der Ansprüche 1 bis 22 aufweist.

## Claims

1. Friction lining (1), in particular for a clutch disc or for a brake, which has at least one support element (2) which is provided on at least one side with friction material (3), the support element (2) having at least one annular part or annular portion part (4) extending over a predetermined peripheral portion of the friction lining (1), the radial extension (r_{R}) of said annular part or annular portion part being small in relation to the radial extension (r_{B}) of the friction material (3), a number of webs (5) of tongue-shaped configuration surrounded on at least one side by friction material (3) being arranged on the annular part or annular portion part (4), **characterized in that** the support element (2) has a number of fastening portions (6) extending radially inwardly, which reach beyond the radial extension of the friction material (3), that the support element (2) and the webs (5) are encased with the friction material (3) on one face in a flush manner and the friction material (3) extends beyond the other face of the support element (2) and the webs (5).

2. Friction lining according to Claim 1, **characterized in that** it has a substantially circular-like basic shape.

3. Friction lining according to Claim 1 or 2, **characterized in that** the support element (2) and the webs (5) are provided with friction material (3) on both sides.

4. Friction lining according to one of Claims 1 to 3, **characterized in that** the friction material (3) is configured as a continuous ring.

5. Friction lining according to Claim 4, **characterized in that** grooves or notches are incorporated into the surface of the friction material (3).

6. Friction lining according to one of Claims 1 to 5, **characterized in that** the support element (2) has a continuous and annular part (4) extending over the entire periphery of the friction lining (1).

7. Friction lining according to one of Claims 1 to 6, **characterized in that** the radial extension (r_{R}) of the annular part or annular portion part (4) is between 7% and 30%, preferably between 10% and 20% of the radial extension (r_{B}) of the friction material (3).

8. Friction lining according to one of Claims 1 to 7, **characterized in that** the friction material (3) is applied to the support element (2) by an in-situ process.

9. Friction lining according to one of Claims 1 to 8, **characterized in that** the webs (5) of tongue-shaped configuration extend radially outwardly from the annular part and/or the annular portion part (4).

10. Friction lining according to Claim 9, **characterized in that** the webs (5) of tongue-shaped configuration reach as far as the radial external end of the friction material (3).

11. Friction lining according to Claim 9, **characterized in that** the webs (5) of tongue-shaped configuration maintain a spacing (s) from the radial outer end of the friction material (3).

12. Friction lining according to one of Claims 1 to 8, **characterized in that** the webs (5) of tongue-shaped configuration extend radially inwardly from the annular part and/or annular portion part (4) and form the fastening portions (6) in their radial internal end region.

13. Friction lining according to one of Claims 1 to 12, **characterized in that** the webs (5) of tongue-shaped configuration are of curved configuration, viewed in the direction of the rotational axis (7) of the friction lining (1).

14. Friction lining according to one of Claims 1 to 12, **characterized in that** the webs (5) of tongue-shaped configuration are configured in a meandering manner, viewed in the direction of the rotational axis (7) of the friction lining (1).

15. Friction lining according to one of Claims 1 to 14, **characterized in that** the average width (b_{M}) of the webs (5) of tongue-shaped configuration is smaller than or the same as the radial extension (r_{R}) of the annular part or annular portion part (4).

16. Friction lining according to one of Claims 1 to 15, **characterized in that** one fastening portion (6) connects two annular portion parts (4) to one another.

17. Friction lining according to one of Claims 1 to 16, **characterized in that** the annular part and/or the annular portion part (4) is located on the neutral radius (r_{N}).

18. Friction lining according to Claim 17, **characterized in that** the neutral radius (r_{N}) is in the range between 15% and 40% of the radial extension (r_{B}) of the friction material (3) measured from the radial internal end of the friction material (3).

19. Friction lining according to one of Claims 1 to 18, **characterized in that** the fastening portions (6) are configured as eyes for passing through a rivet.

20. Friction lining according to one of Claims 1 to 19, **characterized in that** the annular part and/or the annular portion part (4), the webs (5) of tongue-shaped configuration and the fastening portions (6) are formed in one piece.

21. Friction lining according to Claim 20, **characterized in that** the annular part and/or the annular portion part (4), the webs (5) of tongue-shaped configuration and the fastening portions (6) are stamped out of a sheet metal plate.

22. Friction lining according to Claim 21, **characterized in that** the sheet metal plate is of planar configuration.

23. Friction clutch, in particular motor vehicle friction clutch, having a clutch disc (10) arranged between a flywheel (8) and a pressure plate (9), **characterized in that** the clutch disc (10) has a friction lining (1) according to one of Claims 1 to 22.

## Revendications

1. Garniture de friction (1) pour un plateau d'embrayage ou pour un frein, qui présente au moins un élément porteur (2), qui est garni d'un matériau de friction (3) sur au moins un côté, dans laquelle l'élément porteur (2) présente une pièce annulaire ou une pièce annulaire partielle (4) s'étendant sur une partie périphérique prédéterminée autour de la garniture de friction (1), et dont l'extension radiale (r_{R}) est petite par rapport à l'extension radiale (r_{B}) du matériau de friction (3), dans laquelle plusieurs nervures (5) en forme de languettes, entourées au moins sur un côté par le matériau de friction (3), sont disposées sur la pièce annulaire ou la pièce annulaire partielle (4), **caractérisée en ce que** l'élément porteur (2) présente plusieurs parties de fixation (6) s'étendant radialement vers l'intérieur, qui s'étendent au-delà de l'extension radiale du matériau de friction (3), **en ce que** l'élément porteur (2) et les nervures (5) se terminent sur un côté à fleur du matériau de friction (3) et le matériau de friction (3) s'étend au-delà de l'autre côté de l'élément porteur (2) et des nervures (5).

2. Garniture de friction selon la revendication 1, **caractérisée en ce qu'**elle présente une forme de base essentiellement en anneau circulaire.

3. Garniture de friction selon la revendication 1 ou 2, **caractérisée en ce que** l'élément porteur (2) et les nervures (5) sont munies sur chaque côté de matériau de friction (3).

4. Garniture de friction selon l'une quelconque des revendications 1 à 3, **caractérisée en ce que** le matériau de friction (3) se présente sous la forme d'un anneau continu.

5. Garniture de friction selon la revendication 4, **caractérisée en ce que** des rainures ou des incisions sont pratiquées dans la surface du matériau de friction (3) .

6. Garniture de friction selon l'une quelconque des revendications 1 à 5, **caractérisée en ce que** l'élément porteur (2) présente une pièce annulaire (4) continue et s'étendant sur toute la périphérie de la garniture de friction (1).

7. Garniture de friction selon l'une quelconque des revendications 1 à 6, **caractérisée en ce que** l'extension radiale (r_{R}) de la pièce annulaire ou de la pièce annulaire partielle (4) vaut entre 7 % et 30 %, de préférence entre 10 % et 20 %, de l'extension radiale (r_{B}) du matériau de friction (3).

8. Garniture de friction selon l'une quelconque des revendications 1 à 7, **caractérisée en ce que** le matériau de friction (3) est appliqué sur l'élément porteur (2) par un procédé in situ.

9. Garniture de friction selon l'une quelconque des revendications 1 à 8, **caractérisée en ce que** les nervures (5) en forme de languettes s'étendent radialement vers l'extérieur à partir de la pièce annulaire ou de la pièce annulaire partielle (4).

10. Garniture de friction selon la revendication 9, **caractérisée en ce que** les nervures (5) en forme de languettes s'étendent jusqu'à l'extrémité radialement extérieure du matériau de friction (3).

11. Garniture de friction selon la revendication 9, **caractérisée en ce que** les nervures (5) en forme de languettes gardent une distance (s) par rapport à l'extrémité radialement extérieure du matériau de friction (3).

12. Garniture de friction selon l'une quelconque des revendications 1 à 8, **caractérisée en ce que** les nervures (5) en forme de languettes s'étendent radialement vers l'intérieur à partir de la pièce annulaire ou de la pièce annulaire partielle (4) et forment dans leur région d'extrémité radialement intérieure les parties de fixation (6).

13. Garniture de friction selon l'une quelconque des revendications 1 à 12, **caractérisée en ce que** les nervures (5) en forme de languettes sont réalisées en forme d'arc, vues dans la direction de l'axe de rotation (7) de la garniture de friction (1).

14. Garniture de friction selon l'une quelconque des revendications 1 à 12, **caractérisée en ce que** les nervures (5) en forme de languettes sont réalisées sous forme sinueuse, vues dans la direction de l'axe de rotation (7) de la garniture de friction (1).

15. Garniture de friction selon l'une quelconque des revendications 1 à 14, **caractérisée en ce que** la largeur moyenne (b_{M}) des nervures (5) en forme de languettes est inférieure ou égale à l'extension radiale (r_{R}) de la pièce annulaire ou de la pièce annulaire partielle (4).

16. Garniture de friction selon l'une quelconque des revendications 1 à 15, **caractérisée en ce qu'**une partie de fixation (6) relie l'une à l'autre deux pièces annulaires partielles (4).

17. Garniture de friction selon l'une quelconque des revendications 1 à 16, **caractérisée en ce que** la pièce annulaire ou la pièce annulaire partielle (4) est située sur le rayon neutre (r_{N}).

18. Garniture de friction selon la revendication 17, **caractérisée en ce que** le rayon neutre (r_{N}) se situe dans la plage comprise entre 15 % et 40 % de l'extension radiale (r_{B}) du matériau de friction (3), mesurée à partir de l'extrémité radialement intérieure du matériau de friction (3).

19. Garniture de friction selon l'une quelconque des revendications 1 à 18, **caractérisée en ce que** les parties de fixation (6) se présentent sous la forme d'oreilles pour le passage d'un rivet.

20. Garniture de friction selon l'une quelconque des revendications 1 à 19, **caractérisée en ce que** la pièce annulaire ou la pièce annulaire partielle (4), les nervures (5) en forme de languettes et les parties de fixation (6) sont réalisées en une seule pièce.

21. Garniture de friction selon la revendication 20, **caractérisée en ce que** la pièce annulaire ou la pièce annulaire partielle (4), les nervures (5) en forme de languettes et les parties de fixation (6) sont estampées dans une platine de tôle.

22. Garniture de friction selon la revendication 21, **caractérisée en ce que** la platine de tôle est plane.

23. Embrayage à friction, en particulier embrayage à friction pour véhicule automobile, avec un plateau d'embrayage (10) disposé entre un volant-moteur (8) et un plateau de pression (9), **caractérisé en ce que** le plateau d'embrayage (10) présente une garniture de friction (1) selon l'une quelconque des revendications 1 à 22.
